# EUROPEAN PATENT APPLICATION

(11) **EP 4 442 336 A1**
(43) Date of publication of application: **09.10.2024**
(21) Application number: 21964981.1
(22) Date of filing: 29.11.2021
(51) Int. Cl.: A63F 1/14

(54) **DUAL-ROBOT-ARM CARD DEALING SYSTEM**

(71) Applicant: Jumbo Technology Co., Ltd., Taichung City 407 (TW)
(72) Inventor: CHANG, Chia Liang, Taichung City 407 Taiwan (TW); LIN, Lien Yung, Taichung City 407 Taiwan (TW)
(74) Representative: 2K Patentanwälte Blasberg Kewitz & Reichel
(86) International application number: PCT/CN2021/133987
(87) International publication number: WO 2023/092551

(57) **Abstract**

A dual-robot-arm card dealing system, which performs a card opening program on a plurality of playing cards in a game. The system includes a card dealing table (10), a card recognition module (20), a first robot arm (30), a second robot arm (40) and a controller (50), wherein the controller (50) sequentially generates a plurality of card opening threads according to the process of a game; and the controller (50) selects any one of the first robot arm (30) and the second robot arm (40) to sequentially execute the plurality of card opening threads, and cooperates with the card dealing table (10) and the card recognition module (20) to complete the card opening program. Accordingly, the first robot arm (30) and the second robot arm (40) can operate at the same time and are standbys for each other, such that the card opening program can be accelerated, and when a single arm fails, the game can still be completed by continuing to deal cards, so as to reduce disputes and improve the credibility of the game.

## Description

### FIELD OF THE INVENTION

The present invention relates to poker games and, more particularly, to a card dealing system for poker games.

### BACKGROUND OF THE INVENTION

There are a variety of game plays in poker games wherein card shuffling must be performed before the game begins to sufficiently mess up the deck and provide an unpredictable card face that avoids the problem of cheating. In the conventional shuffling process, manual shuffling is mostly used and then the cards are dealt manually with the help of a croupier, which is expensive and prone to the risk of cheating.

Therefore, in order to reduce the use of manpower and eliminate the possibility of cheating, for example, China patent No. CN 101125250 B discloses an automatic card dealing method which uses a mechanical arm to deal cards and uses a detector to identify the card face. As another example, US Patent No. US 9,931,562 B2 discloses a card dealing device having two card dealing arms that simulate real-person dealings to make the players more impressive.

Although the above-mentioned card dealing display device eliminates the problem of cheating, the card dealing method using a single mechanical arm leads to a long dealing process and cannot meet the demand for the speed of dealing. In addition, a card dealing device having two card dealing arms is mainly configured for simulating real-person card dealing. Although the two card dealing arms can operate card dealing synchronously, the two card dealing arms are provided on the same main body, and once the main body is damaged and cannot operate, the two card dealing arms cannot operate at the same time.

### SUMMARY OF THE INVENTION

Accordingly, it is a primary object of the present invention to provide a dual-robot-arm card dealing system for performing a card opening process on a plurality of playing cards in a game, including a card dealing deck, a card recognition module, a first robot arm, a second robot arm, and a controller, the card dealing deck having an unused card box for placing the plurality of playing cards that have not undergone the card opening process and a used card box for placing the plurality of playing cards that have finished the card opening process. That is, the plurality of playing cards that have finished the card opening process may be replaced from the unused card box to the used card box.

The card recognition module is provided on the card dealing deck, and the card recognition module includes an identification plane, and the card recognition module is configured for identifying card faces of the plurality of playing cards moving onto the identification plane. In one embodiment, the identification plane is a transparent glass, and an image capturer is hidden inside, so as to capture images of the card faces of the plurality of playing cards, so that the card recognition module analyzes the images for identification.

In one embodiment, the first robot arm includes a first suction nozzle and a first link mechanism. The first link mechanism includes a rotary seat and a plurality of single-arm levers, wherein the plurality of single-arm levers are pivotally connected head-to-tail and pivotally connected to the rotary seat at one end, so that there is rotational freedom between the rotary seat and the single-arm lever and between different single-arm levers. The first suction nozzle is provided on one end of the first link mechanism, and the first link mechanism performs a first dealing and collecting card path to drive the first suction nozzle moving on the first dealing and collecting card path to perform the card opening process. In detail, the first dealing and collecting card path is from the unused card box to the identification plane and then from the identification plane to the used card box. When the first suction nozzle moves to the unused card box, the first suction nozzle sucks one of the plurality of playing cards located in the unused card box and moves to the identification plane so as to identify a card face, and when the first suction nozzle moves to the used card box, the first suction nozzle places one of the plurality of playing cards sucked in the used card box.

The second robot arm has a structure the same as the first robot arm. In detail, the second robot arm includes a second suction nozzle and a second link mechanism, the second link mechanism performs a second dealing and collecting card path to drive the second suction nozzle moving on the second dealing and collecting card path so as to perform the card opening process, the second dealing and collecting card path is from the unused card box to the identification plane and then to the used card box, and when the second suction nozzle moves to the unused card box, the second suction nozzle sucks one of the plurality of playing cards located in the unused card box and moves to the identification plane so as to identify a card face, and when the second suction nozzle moves to the used card box, the second suction nozzle places one of the plurality of playing cards sucked in the used card box.

The controller sequentially generates a plurality of card opening threads according to a progress of the game, and selects either one of the first robot arm and the second robot arm to sequentially execute the plurality of card opening threads to complete the card opening process.

Accordingly, in the present invention, by allowing the controller to select either one of the first robot arm and the second robot arm to sequentially perform the plurality of card opening threads, the first robot arm and the second robot arm can operate simultaneously to deal the cards and accelerate dealing, while the other robot arm can continue to deal the cards to complete the game when either robot arm is broken and fails, thereby reducing disputes and increasing the credibility of the game.

### BRIEF DESCRIPTION OF THE DRAWINGS

FIG. 1 is a schematic diagram of a three-dimensional structure of the present invention.
FIG. 2 is a block diagram of a system of the present invention.
FIG. 3 is a flowchart of the present invention implemented in card opening threads of Baccarat game.
FIG. 4 is a chronological chart showing movement of a mechanical arm of the present invention implemented in the Baccarat game.

### DETAILED DESCRIPTION OF THE PREFERRED EMBODIMENTS

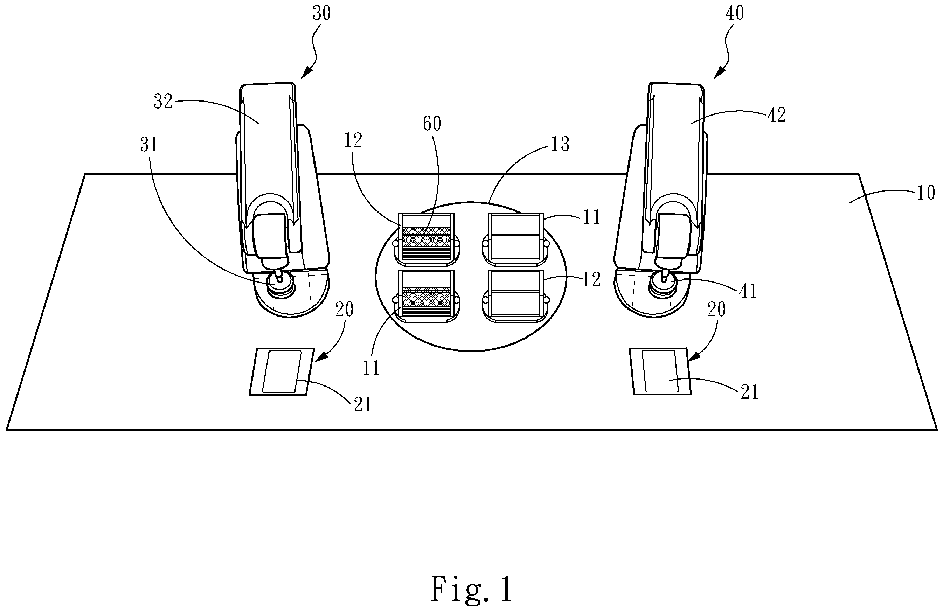

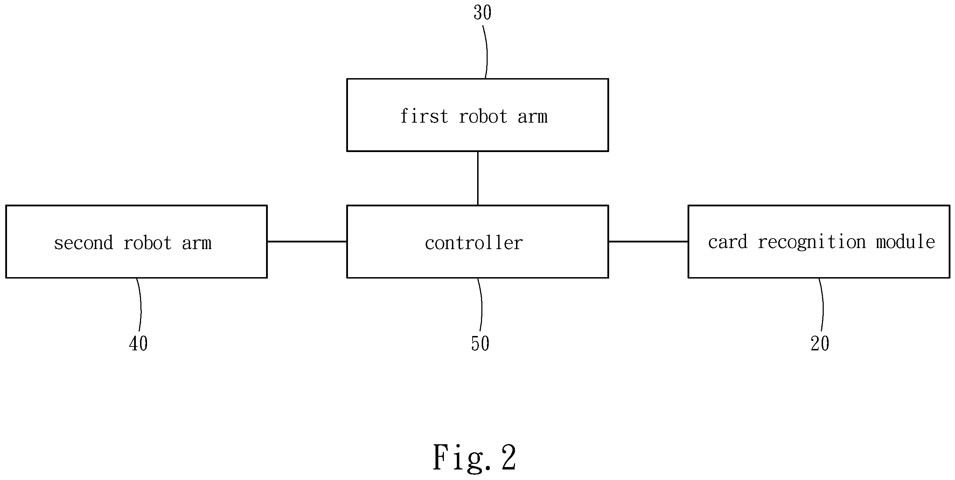

To provide a better understanding and appreciation of the features, objects, and effects of the invention, reference should be made to the preferred embodiments, taken in conjunction with the accompanying drawings:
With reference to FIG. 1 and FIG. 2, a dual-robot-arm card dealing system is provided for performing a card opening process on a plurality of playing cards in a game, including a card dealing deck 10, a card recognition module 20, a first robot arm 30, a second robot arm 40, and a controller 50. The card dealing deck 10 includes an unused card box 11 for placing the plurality of playing cards 60 that have not been undergone the card opening process, and a used card box 12 for placing the plurality of playing cards 60 that have finished the card opening process. That is, the plurality of playing cards 60 that have finished the card opening process will be replaced from the unused card box 11 to the used card box 12. Also, in practice, two sets of unused card box 11 and the used card box 12 may be provided on a turntable 13, and when one set of the unused card box 11 and the used card box 12 is in use, the other set of the unused card box 11 and the used card box 12 may be automatically shuffled by using an automatic shuffler (not shown).

Two card recognition modules 20 are provided on the card dealing deck 10 and respectively close to the first robot arm 30 and the second robot arm 40, and each of the two card recognition module 20 includes an identification plane 21, and each of the two card recognition module 20 is configured for identifying card faces of the plurality of playing card 60 moving onto the identification plane 21. In one embodiment, the identification plane 21 is a transparent glass with an image capturer (not shown) hidden inside, so as to capture images of the card faces of the plurality of playing cards 60, so that the card recognition module 20 analyzes the images for identifying the card faces of the plurality of playing cards 60.

The first robot arm 30 includes a first suction nozzle 31 and a first link mechanism 32. In one embodiment. The first link mechanism 32 includes a rotary seat and a plurality of single-arm levers, wherein the plurality of single-arm levers are pivotally connected head-to-tail and pivotally connected to the rotary seat at one end, so that there is rotational freedom between the rotary seat and the single-arm lever and between different single-arm levers. The first suction nozzle 31 is provided on one end of the first link mechanism 32, and the first link mechanism 32 performs a first dealing and collecting card path to drive the first suction nozzle 31 moving on the first dealing and collecting card path to perform the card opening process. In detail, the first dealing and collecting card path is from the unused card box 11 to the identification plane 21 and then to the used card box 12. When the first suction nozzle 31 moves to the unused card box 11, the first suction nozzle 31 sucks one of the plurality of playing cards 60 located in the unused card box 11 and moves to the identification plane 21 so as to identify a card face, and when the first suction nozzle 31 moves to the used card box 12, the first suction nozzle 31 places one of the plurality of playing card 60 sucked in the used card box 12.

The second robot arm 40 has a structure the same as the first robot arm 30. In detail, the second robot arm 40 includes a second suction nozzle 41 and a second link mechanism 42, the second link mechanism 42 performs a second dealing and collecting card path to drive the second suction nozzle 41 moving on the second dealing and collecting card path to perform the card opening process, the second dealing and collecting card path is from the unused card box 11 to the identification plane 21 and then to the used card box 12, and when the second suction nozzle 41 moves to the unused card box 11, the second suction nozzle 41 sucks one of the plurality of playing cards 60 located in the unused card box 11 and moves to the identification plane 21 so as to identify a card face, and when the second suction nozzle 41 moves to the used card box 12, the second suction nozzle 41 places plurality of playing card 60 sucked in the used card box 12. When two card recognition modules 20 are provided, two identification planes 21 of the two card recognition modules 20 are provided for the first dealing and collecting card path and the second dealing and collecting card path to pass through, respectively.

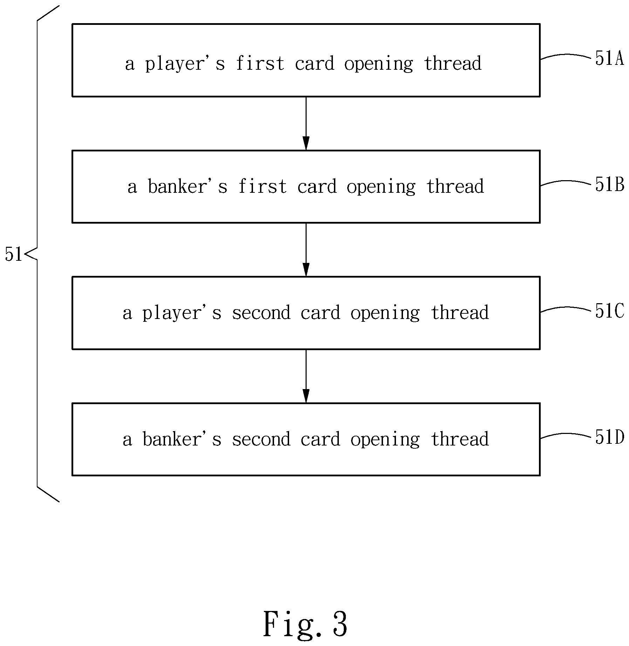

Referring again to FIG. 3, the controller 50 sequentially generates a plurality of card opening threads 51 according to a progress of the game. Taking a game of Baccarat as an example, description is made to the condition without drawing cards, and the plurality of card opening threads 51 include: a player's first card opening thread 51A, a banker's first card opening thread 51B, a player's second card opening thread 51C, and a banker's second card opening thread 51D. The controller 50 selects either one of the first robot arm 30 and the second robot arm 40 to sequentially execute the plurality of card opening threads 51 to complete the card opening process.

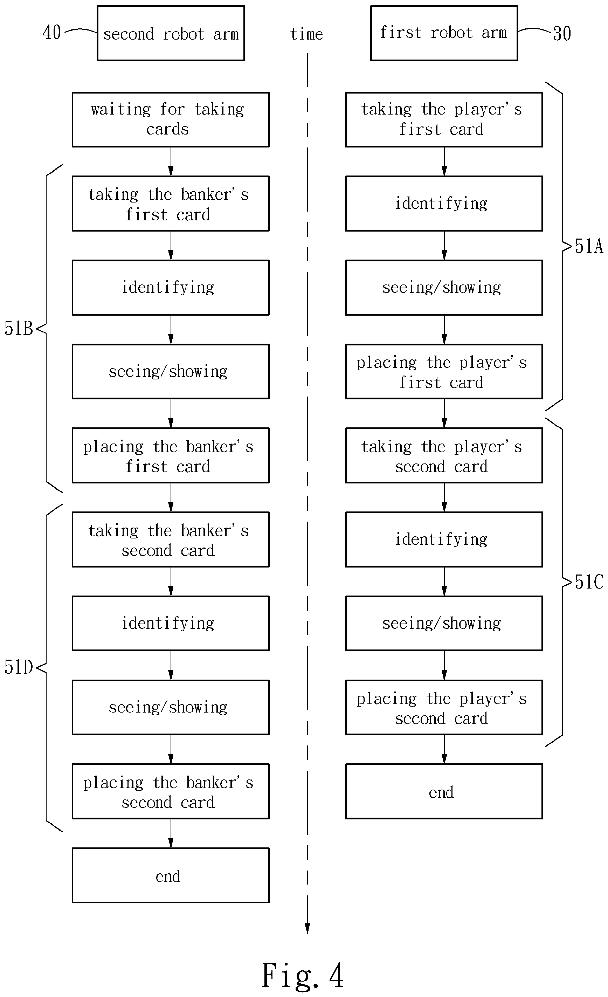

Referring again to FIG. 4, in one embodiment, steps of the player's first card opening thread 51A include: taking the player's first card, identifying, seeing/showing, and placing the player's first card. Steps of the banker's first card opening thread 51B include: taking the banker's first card, identifying, seeing /showing, and placing the banker's first card. Steps of the player's second card opening thread 51C include: taking the player's second card, identifying, seeing/showing, and placing the player's second card. Steps of the banker's second card opening thread 51D include: taking the banker's second card, identifying, seeing/showing, and placing the banker's second card. If in the beginning, the first robot arm 30 executes the player's first card opening thread 51A, the second robot arm 40 may start to execute the banker's first card opening thread 51B when the first robot arm 30 proceeds to the "identifying" step. Namely, when the first robot arm 30 and the second robot arm 40 are both in normal operation, at least two adjacent chronologic of the plurality of card opening threads may have a timing for overlapped execution, further accelerating a card dealing process.

Furthermore, the controller 50 firstly confirms a status of the first robot arm 30 and a status of the second robot arm 40 before executing the plurality of card opening threads 51, and the controller 50 selects either the first robot arm 30 or the second robot arm 40 to execute the plurality of card opening threads 51 according to the status of the first robot arm 30 and the status of the second robot arm 40. When either robot arm is broken or fails, the other robot can still complete the card opening process, allowing the game to be terminated, and preventing the player from questioning the fairness of the game.

In one embodiment, the controller 50 selects the first robot arm 30 and the second robot arm 40 in turns to perform the card opening process to allow the first robot arm 30 and the second robot arm 40 to be used for an equivalent period of time to facilitate scheduling of maintenance operations.

If a first party player and a second party player belonging to different camps in the game, the plurality of card opening threads 51 is attributed to the first party player or the second party player, respectively, and the plurality of card opening threads 51 attributed to the first party player perform the card opening process by the first robot arm 30, and the plurality of card opening threads 51 attributed to the second party player perform the card opening process by the second robot arm 40. The first dealing and collecting card path and second card dealing and collecting card path include a first card presentation direction and a second card presentation direction, respectively, and the first card presentation direction and the second card presentation direction are facing towards the first party player and the second party player, respectively, thereby increasing the game confrontation and greatly enhancing the player's sense of participation.

As stated above, the features of the present invention at least include the following contents.
1. By allowing the controller to select either one of the first robot arm and the second robot arm to sequentially execute the plurality of card opening threads, the first robot arm and the second robot arm can operate simultaneously to deal the cards and accelerate dealing.
2. The other robot arm can continue to deal the cards to complete the game when either robot arm is broken and fails, thereby reducing disputes and increasing the credibility of the game.
3. At least two adjacent chronologic of the plurality of card opening threads, further accelerating the card dealing process.
4. The first robot arm and the second robot arm may be dedicated to the card opening processes of different camps, and may increase the sense of confrontation and increase the sense of investment of the players.

## Claims

1. A dual-robot-arm card dealing system for performing a card opening process on a plurality of playing cards (60) in a game, comprising:
a card dealing deck (10), comprising an unused card box (11) for placing the plurality of playing cards (60) that have not undergone the card opening process, and a used card box (12) for placing the plurality of playing cards (60) that have finished the card opening process;
a card recognition module (20), provided on the card dealing deck (10), and the card recognition module (20) comprising an identification plane (21), and the card recognition module (20) being configured for identifying card faces of the plurality of playing cards (60) moving onto the identification plane (21);
a first robot arm (30), comprising a first suction nozzle (31) and a first link mechanism (32), the first link mechanism (32) comprising a first dealing and collecting card path to drive the first suction nozzle (31) moving on the first dealing and collecting card path to perform the card opening process, wherein the first dealing and collecting card path is from the unused card box (11) to the identification plane (21) and then to the used card box (12), and when the first suction nozzle (31) moves to the unused card box (11), the first suction nozzle (31) sucks one of the plurality of playing cards (60) located in the unused card box (11) and moves to the identification plane (21) so as to identify a card face, and when the first suction nozzle (31) moves to the used card box (12), the first suction nozzle (31) places one of the plurality of playing cards (60) sucked in the used card box (12);
a second robot arm (40), comprising a second suction nozzle (41) and a second link mechanism (42), the second link mechanism (42) performing a second dealing and collecting card path to drive the second suction nozzle (41) to move on the second dealing and collecting card path so as to perform the card opening process, wherein the second dealing and collecting card path is from the unused card box (11) to the identification plane (21) and then to the used card box (12), and when the second suction nozzle (41) moves to the unused card box (11), the second suction nozzle (41) sucks one of the plurality of playing cards (60) located in the unused card box (11) and moves to the identification plane (21) so as to identify a card face, and when the second suction nozzle (41) moves to the used card box (12), the second suction nozzle (41) places one of the plurality of playing cards (60) sucked in the used card box (12); and
a controller (50), the controller (50) sequentially generating a plurality of card opening threads (51) according to a progress of the game, and selecting either one of the first robot arm (30) and the second robot arm (40) to sequentially execute the plurality of card opening threads (51) to complete the card opening process.

2. The dual-robot-arm card dealing system according to claim 1, wherein at least two adjacent chronologic of the plurality of card opening threads (51) have a timing for overlapped execution when the first robot arm (30) and the second robot arm (40) are both in normal operation.

3. The dual-robot-arm card dealing system according to claim 1, wherein two card recognition modules (20) are provided close to the first robot arm (30) and the second robot arm (40), respectively, and two identification planes (21) of the two card recognition modules (20) are respectively provided for the first dealing and collecting card path and the second dealing and collecting card path to pass through.

4. The dual-robot-arm card dealing system according to claim 1, wherein the controller (50) firstly confirms a status of the first robot arm (30) and a status of the second robot arm (40) before executing the plurality of card opening threads (51), and the controller (50) selects either the first robot arm (30) or the second robot arm (40) to execute the plurality of card opening threads (51) according to the status of the first robot arm (30) and the status of the second robot arm (40).

5. The dual-robot-arm card dealing system according to claim 1, wherein the controller (50) selects the first robot arm (30) and the second robot arm (40) in turns to perform the card opening process.

6. The dual-robot-arm card dealing system according to claim 1, wherein a first party player and a second party player belonging to different camps in the game, the plurality of card opening threads (51) attributed to the first party player or the second party player, respectively, and the plurality of card opening threads (51) attributed to the first party player performing the card opening process by the first robot arm (30), and the plurality of card opening threads (51) attributed to the second party player performing the card opening process by the second robot arm (40).

7. The dual-robot-arm card dealing system according to claim 6, wherein the first dealing and collecting card path and second dealing and collecting card path comprise a first card presentation direction and a second card presentation direction, respectively, and the first card presentation direction and the second card presentation direction are facing towards the first party player and the second party player, respectively.
